# EUROPÄISCHE PATENTSCHRIFT

(11) **EP 1 023 335 B1**
(45) Veröffentlichungstag und Bekanntmachung des Hinweises auf die Patenterteilung: **16.07.2003**
(21) Anmeldenummer: 98948987.7
(22) Anmeldetag: 17.09.1998
(51) Int. Cl.: C08F 6/00

(54) **VERFAHREN ZUR VERMINDERUNG DES RESTMONOMERENGEHALTS IN WÄSSRIGEN POLYMERDISPERSIONEN**
METHOD FOR REDUCING THE CONTENT OF RESIDUAL MONOMERS IN AQUEOUS POLYMER DISPERSIONS
PROCEDE DE REDUCTION DE LA TENEUR EN MONOMERES RESIDUELS DANS DES DISPERSIONS DE POLYMERE AQUEUSES

(30) Priorität: 18.09.1997 DE 19741187
(43) Veröffentlichungstag der Anmeldung: 02.08.2000
(73) Patentinhaber: BASF AKTIENGESELLSCHAFT, 67056 Ludwigshafen (DE)
(72) Erfinder: RUPANER, Robert, D-67158 Ellerstadt (DE); BAUER, Gerhard, D-69469 Weinheim (DE); LAWRENZ, Sven, D-68161 Mannheim (DE); HEIBEL, Claudia, D-69469 Weinheim (DE); DOBBELAAR, Johannes, D-67157 Wachenheim (DE)
(74) Vertreter: Kinzebach, Werner, Dr.
(86) Internationale Anmeldenummer: EP9805928
(87) Internationale Veröffentlichungsnummer: WO99014249

(56) Entgegenhaltungen:
- EP-A- 0 363 795
- EP-A- 0 590 468
- DE-A- 19 529 599

## Beschreibung

Die Erfindung betrifft ein Verfahren zur Verminderung des Restmonomerengehalts von wässrigen Polymerdispersionen durch chemische Nachbehandlung mit einem speziellen Redoxinitiatorsystem.

Wässrige Polymerdispersionen enthalten nach ihrer Herstellung durch radikalische Polymerisation oder Copolymerisation neben einem Polymer-Feststoffanteil von 30 bis 75 Gew. % aufgrund der unvollständigen Polymerisation der eingesetzten Monomeren in der radikalischen Hauptpolymerisation, die meist bis zu einem Monomerenumsatz von 95 und bevorzugt von 98-99 Gew.% geführt wird, noch einen unerwünschten Anteil an ungebundenen freien Monomeren ("Restmonomere"). Aus meist toxikologischen Gründen fordert der Markt wässrige Polymersysteme mit einem niedrigen Gehalt an niedermolekularen Bestandteilen bei gleichbleibenden Verarbeitungsund Anwendungseigenschaften.

Eine physikalische Desodorierung einer monomerhaltigen Polymerdispersion zur Verminderung des Restmonomergehalts stellt oft hohe Anforderungen an die Prozeßtechnik und die Stabilität der Polymerdispersionen, weshalb eine allgemeine Anwendbarkeit nicht gegeben ist.

Es sind Methoden bekannt, durch Zusatz von Nucleophilen, die mit den Monomeren Additionsprodukte bilden, den Gehalt an Restmonomeren in wässrigen Polymersystemen zu vermindern. So ist z.B. aus der US-A 4 278 582 der Zusatz von Amino- oder Thiolverbindungen zu Styrol-Butadien-Acrylnitril-Copolymerisatdispersionen und aus der GB 1 272 584 der Zusatz von Hydrazin bekannt, um den Monomerengehalt zu reduzieren. Nachteilig ist bei diesen Methoden, daß die Addukte bildenden Agentien meist im Überschuß zugesetzt werden müssen, daß die Agentien oft Elektrolyte sind oder als flüchtige Bestandteile in den Polymerdispersionen verbleiben. Auch kann in manchen Fällen (vgl.z.B. DE-A 2919 096) ein Teil der mit den Monomeren gebildeten Addukte wieder in die Ausgangsstoffe zerfallen, was den Gehalt an Restmonomeren wieder ansteigen läßt.

Es ist auch bekannt, bei Polymerisationstemperatur nach Zusatz von Initiatoren eine Nachbehandlung zur Verminderung des Gehalts an Restmonomeren durchzuführen, wozu besonders Redoxinitiatoren Verwendung finden. Hierbei kommt der Art des verwendeten Reduktionsmittels im Redox-Initiatorsystem besondere Bedeutung zu. Aus der EP-A 379 892 sowie der DE-A 3834734 ist die Verwendung von Rongalit C (Na-Salz der Hydroxymethansulfinsäure) als Reduktionskomponente im Redox-Initiatorsystem für eine solche Nachbehandlung bekannt. Nachteilig ist, daß sich während der Nachpolymerisationsreaktion leicht Formaldehyd bildet. Bei der Verwendung von Acetonbisulfit als Reduktionsmittel dafür, wie es in der US-A 4360632 und DE-A 4419518 beschrieben ist, kann während der Reaktion wieder Aceton freigesetzt werden. Die DE-A 4435422 empfiehlt für die Nachpolymerisation von Polymerdispersionen Redoxinitiatoren mit Formamidinsulfinsäure als Reduktionskomponente. Nachteilig ist jedoch deren beschränkte Wasserlöslichkeit sowie die Unbeständigkeit von dessen wässrigen Lösungen im Kontakt mit Luft, was deren technische Handhabung erschwert. Die Verwendung von reduzierenden Zuckern wie Glukose, von Ascorbinsäure oder Isoascorbinsäure als Komponente in den Redoxinitiatoren kann zu Verfärbungen führen.

Der vorliegenden Erfindung liegt die Aufgabe zugrunde, eine Verminderung des Restmonomerengehalts in wässrigen Polymersystemen zu erreichen, ohne daß es zur Bildung von weiteren flüchtigen Bestandteilen oder Geruchsträgern kommt. Außerdem soll die Verminderung des Restmonomerengehalts ohne Bildung von Mikrokoagulat erfolgen und sich leicht technisch nutzen lassen, z.B. auch in konzentrierten Systemen.

Es wurde nun gefunden, daß sich der Gehalt an Restmonomeren in wässrigen Polymerdispersionen wirksam vermindern läßt, wenn man die Nachbehandlung der Restmonomere enthaltenden wässrigen Polymerdispersionen unter Erhitzen und Zugabe eines Redoxinitiatorsystems durchführt, das im wesentlichen besteht aus
a) 0,01 bis 5, bevorzugt 0,05 bis 2 Gew.%, bezogen auf die zur Herstellung der Polymerdispersion verwendeten Gesamtmonomerenmenge,
   a1) einer Verbindung R¹-OO-R²,
      worin R¹ und R² Wasserstoff, eine C₁-C₈ Alkyl- oder C₆-C₁₂-Arylgruppe bedeuten und gleich oder verschieden sein können, mit der Maßgabe, daß mindestens ein Rest von R¹ und R² Wasserstoff ist, und/oder
   a2) einer in wässrigem Medium Wasserstoffperoxid freisetzenden Verbindung, und
b) 0,01 bis 30, bevorzugt 0,05 bis 5 Gew.%, bezogen auf die zur Herstellung der Polymerdispersion verwendeten Gesamtmonomerenmenge, einer organischen α-Hydroxycarbonsäure, wobei die Hydroxygruppe bevorzugt Teil einer Hydroxymethin-Gruppe (CH(OH)) ist und die Säure keine polymerisierbare olefinisch ungesättigte C-C-Doppelbindung enthält, oder einem Salz davon,
c) 0 bis 1000, bevorzugt ≤ 100 ppm, insbesondere 10 bis 100 ppm, bezogen auf die zur Herstellung der Polymerdispersion verwendete Gesamtmonomerenmenge, eines mehrwertigen Metallions, das seine Wertigkeitsstufe ändern kann.

Als α-Hydroxycarbonsäuren (Reduktionsmittelkomponente) sind insbesondere aliphatische Hydroxycarbonsäuren mit bevorzugt 2 bis 8 C-Atomen geeignet, wie Glykolsäure (Hydroxyessigsäure), Glyoxylsäurehydrat (Dihydroxyessigsäure), Milchsäure (2-Hydroxypropionsäure), Glycerinsäure (2,3-Dihydroxypropionsäure), Äpfelsäure (2-Hydroxybernsteinsäure) oder Tartronsäure (2-Hydroxymalonsäure). Bevorzugt ist die Verwendung von Weinsäure.

Beide Antipoden und das Racemat sind gleichermaßen wirksam. Das erfindungsgemäße chemische Desodoriersystem zeichnet sich dadurch aus, daß bei seiner Zugabe bei geeigneten Reaktionsbedingungen eine Verminderung der olefinisch ungesättigten Verbindungen (Restmonomeren) bewirkt wird, ohne daß weitere flüchtige Verbindungen als Nebenprodukt entstehen oder infolge eines Elektrolyt-Zusatzes Koagulat gebildet wird.

Das Oxydationsmittel des Redox-Initiatorsystems (Komponente a)) soll in der Lage sein, Radikale zu bilden. In einer weiteren Ausführungsform kann die Kombination von Oxydationsmittel und Reduktionsmittel auch ganz oder teilweise durch eine Persäure ersetzt werden. Als Oxydationsmittel im Redoxsystem findet bevorzugt Wasserstoffperoxid Verwendung, ferner Kaliumperoxid, Natriumperoxid, Natriumperborat sowie weitere in Wasser Wasserstoffperoxid bildende Vorstufen. Als geeignete Oxydationsmittel seien auch tert.-Butylhydroperoxid, Cumolhydroperoxid, Ammonium-, Kalium- oder Natriumpersulfat, Peroxydischwefelsäure und deren Salze, Ammonium-, Kalium- oder Natriumperphosphat oder -diperphosphat, Kaliumpermanganat und andere Salze von Persäuren genannt. Als besonders wirksam hat sich als Initiatorsystem die Kombination von Weinsäure und Wasserstoffperoxid mit Eisen(II)-sulfat als Katalysator erwiesen.

Die Menge an zugesetztem Redoxinitiatorsystem liegt vorzugsweise im Bereich von 0,01 bis 10, insbesondere 0,01 bis 5 Gew.%, bezogen auf eingesetzte Monomere.

Im allgemeinen ist das zur erfindungsgemäßen Nachbehandlung verwendete Redox-Initiatorsystem von dem für die Hauptpolymerisation der Monomeren verwendeten Initiatorsystem verschieden.

Die Komponenten des erfindungsgemäß verwendeten Initiatorsystems werden zweckmäßigerweise zur Nachbehandlung der, ggf. unter Druck, auf ca. 20 bis 150 und insbesondere auf 60 bis 120 °C erhitzten Polymerdispersion unter Rühren während eines Zeitraums von 1/2 bis 5 Stunden allmählich gleichzeitig oder nacheinander zudosiert, wobei im letzten Fall bevorzugt zuerst das Oxydationsmittel zugesetzt wird. Die Zugabe der Initiatorkomponenten kann z.B. von oben, unten oder durch die Seite des Reaktors erfolgen. Als Rührer sind dabei Anker- und Blattrührer bevorzugt. Bevorzugt haben dabei die dispergierten Polymeren eine Teilchengröße von 50 bis 400 nm und eine monomodale oder breite Verteilung.

Wie angegeben, können die bei der Nachbehandlung der Polymerdispersionen zugesetzten Initiatorsysteme auch mehrwertige Metallionen enthalten, die ihre Wertigkeitsstufe ändern können. Diese wirken katalytisch und unterstützen Elektronenübertragungsreaktionen. Sehr geeignet dafür sind Eisen-, Kupfer-, Mangan-, Vanadin-, Nickel-, Cer-, Chrom-, Platin- und Palladiumionen, von denen Eisen- und Manganionen bevorzugt sind. Ein Zusatz von Basen ist oft zweckmäßig, um den pH-Wert der Polymerdispersion auf einen geeigneten Wert einzustellen. Geeignete Basen sind Natronlauge, Ammoniakwasser und Triethanolamin. Bevorzugt liegt der pH-Wert der Polymerdispersion bei der erfindungsgemäßen Nachbehandlung kleiner als 8, bevorzugt zwischen 5 und 7. Der pH-Wert kann im Prinzip auch im basischen Bereich liegen, was aber mit Nachteilen verbunden ist. So ist Wasserstoffperoxid im basischen Bereich instabil, die Säure liegt in Salzform und somit ausschließlich in der Wasserphase vor, und die katalysierenden Metallionen werden in schwerlösliche Hydroxide oder Hydroxo-Komplexe überführt. Die Einstellung höherer pH-Werte ist somit nur unter speziellen Voraussetzungen, z.B. unter komplexierenden Bedingungen, sinnvoll.

Das erfindungsgemäße Verfahren eignet sich besonders zur Verminderung der Restmonomerenmenge in wässrigen Dispersionen von Copolymerisaten von Acrylaten und Methacrylaten (Ester der Acrylsäure oder Methacrylsäure mit C₁-C₁₂-Alkanolen, insbesondere C₁-C₈-Alkanolen, wobei Methyl-, Ethyl-, n-Butyl- und 2-Ethylhexylacrylat und -methacrylat besonders bevorzugt sind), von Styrol wie Styrol-Butadien- oder Styrol- (Meth)Acrylester-Copolymerisaten und Vinylacetat-Copolymerisaten wie Ethylen-Vinylacetat-Copolymerisaten. Neben den Hauptmonomeren können die für die Polymerisation verwendeten Monomerengemische auch in kleineren Mengen, bevorzugt in Mengen von 0,01 bis 10 Gew.% der Gesamtmonomerenmenge, polare Monomere wie Acrylsäure, Methacrylsäure, Acrylnitril, Maleinsäure oder deren Anhydrid oder Hydroxyalkyl(meth)acrylate enthalten.

Die Herstellung der erfindungsgemäß nachbehandelten wässrigen Polymerisatdispersionen ist dem Fachmann bekannt (vgl. z.B. Encyclopedia of Polymer Science and Engineering, Vol. 8, 659 ff. (1957); D.C. Blackley in High Polymer Latices, Vol.1, 35 ff (1966); F.Hölscher, Dispersionen synthetischer Hochpolymere, Springer-Verlag Berlin (1969)). Sie erfolgt durch Emulsionpolymerisation der olefinisch ungesättigten Monomeren in Gegenwart eines bevorzugt wasserlöslichen Polymerisationsinitiators, insbesondere eines Redox-Initiators, sowie in Gegenwart von Emulgatoren und ggf. Schutzkolloiden und üblichen weiteren Zusatzstoffen. In der Regel erfolgt hierbei der Zusatz der Monomeren durch kontinuierlichen Zulauf. Als Initiator ist die Verwendung von Peroxodischwefelsäure und/oder deren Salzen in Mengen von 0,1 bis 2 Gew.%, bezogen auf die Gesamtmenge der Monomeren, bevorzugt. Die Polymerisationstemperatur beträgt im allgemeinen 20 bis 150 und bevorzugt 60 bis 120 °C. Die Polymerisation findet ggf. unter Druck statt. Als Emulgatoren werden insbesondere anionische Emulgatoren allein oder im Gemisch mit nichtionischen Dispergiermitteln in einer Menge von insbesondere 0,5 bis 6 Gew.% der Gesamtmonomerenmenge verwandt.

Die erfindungsgemäße Nachbehandlung der wässrigen Polymerdispersion zur Verminderung des Restmonomerengehalts erfolgt insbesondere, nachdem die Gesamtmonomerenmenge in der Hauptpolymerisation zu mindestens 95 und bevorzugt zu mindestens 98 bis 99 Gew.% umgesetzt wurde. Die Verhältnisse bei der Hauptpolymerisation und bei der Nachbehandlung sind im allgemeinen verschieden. Während bei der Hauptpolymerisation bei hoher Konzentration an Monomeren und wachsenden und somit immer hydrophober werdenden Oligomerradikalen der Radikaleintritt in die Dispersionspartikel leicht erfolgt, wird dieser bei der Nachbehandlung aufgrund der geringen Monomerkonzentration und mangels wachsender und so immer hydrophober werdender Oligomerradikale sehr schwierig. Ein Radikalzerfall bei der Nachbehandlung in der wasserphase der Dispersion ist wenig wirkungsvoll für die gewünschte Minderung von hydrophoben Restmonomeren, da die Radikale bei Fehlen von wasserlöslichen Restmonomeren überwiegend zu unreaktiven Produkten kombinieren oder durch Nebenreaktionen verbraucht werden. Wegen des grundsätzlichen Unterschiedes zwischen Hauptpolymerisation und Nachbehandlung sei nur kurz auf den die Hauptpolymerisation betreffenden relevanten Stand der Technik eingegangen.

So nennt die PCT-Anmeldung WO 95/30697 Persäuren als geeignet, in radikalischen (Haupt-)Polymerisationen als Polymerisationsregler zu fungieren. In der DE-A 3037967 wird Ameisensäure als Kettenübertragungsmittel bei der Lösungspolymerisation von wasserlöslichen Monomeren beschrieben, also deren Einsatz bei der (Haupt-) Lösungspolymerisation zur Absenkung des Molekulargewichts empfohlen. Eine solche Aufgabe stellt sich bei der erfindungsgemäßen Nachbehandlung überhaupt nicht. Aus der DE-A 3718520 ist ferner bekannt, zur Herstellung von Leimungsmitteln für die Emulsionspolymerisation von Monomeren als Initiatoren eine Kombination von Wasserstoffperoxid mit Milchsäure zu verwenden. Danach werden die Restmonomeren und vorhandene Lösungsmittel durch Destillation entfernt. In der EP-A 249786 wird die Verwendung einer Initiatorlösung von Wasserstoffperoxid und Isoascorbinsäure zur Emulsionspolymerisation von Styrol und Acrylnitril beschrieben. Die erhaltenen Emulsionscopolymerisate werden danach fünf Stunden lang mit Natronlauge bei 185 °C im Autoklaven zu wasserlöslichen Copolymerisaten hydrolysiert. In der JP-A 08127605 wird in der Hauptpolymerisation mit Wasserstoffperoxid und Weinsäure initiiert, in der Nachbehandlung werden aber Restmonomere mit 2,2'-Azo-bis(2-methylpropionamidin)dihydrochlorid abgereichert. In der DE-A 3718520 wird in der Hauptpolymerisation mit Wasserstoffperoxid und Milchsäure initiiert, in der Nachbehandlung werden die Restmonomeren aber mit einer Kombination von tert.Butylperoxid und dem Na-Salz der Hydroxymethansulfinsäure abgereichert. Der genannte Stand der Technik legt eine Verwendung der erfindungsgemäßen Initiatorsysteme für eine Nachbehandlung einer Polymerdispersion zur Verminderung von Restmonomeren in keiner Weise nahe.

Die in den nachstehenden Beispielen angegebenen Restmonomerwerte (in ppm) wurden gaschromatographisch ermittelt.

Die Ermittlung des Feststoffgehalts (FG) wurde nach Eintrocknen gravimetrisch bestimmt. Der LD-Wert ist die Lichtdurchlässigkeit einer 0,01 gew.%igen Probe der entsprechenden Polymerdispersion der Schichtdicke von 25 mm im Vergleich zu reinem Wasser. Soweit nicht anders angegeben, beziehen sich Teile und Prozente auf das Gewicht.

### Beispiel 1

Durch radikalische Hauptpolymerisation wurde mit Natriumperoxodisulfat als Initiator eine wässrige Polymerdispersion aus einer Mischung der folgenden Zusammensetzung hergestellt: 250 g n-Butylacrylat, 230 g Styrol, 10 g Acrylsäure, 4 g Styrol-Saatlatex (34%ig in Wasser, Teilchengröße ca. 30 bis 35 nm, 0,5 g Natriumlaurylsulfat (15 %ig in Wasser), 2 g Dowfax 2A1, 2 g Natriumperoxodisulfat, 480 g Wasser. In der Hauptpolymerisation wurde die Monomerenemulsion 3 1/2 Stunden als Zulauf in den Reaktor gegeben und anschließend eine Stunde bei der Polymerisationstemperatur von 80 °C auspolymerisiert. Es wurde eine Copolymerisatdispersion mit einem Feststoffgehalt von 51 % erhalten, die einen pH-Wert von 3,4 aufwies. Sie hatte einen Restmonomerengehalt von 5726 ppm n-Butylacrylat und 449 ppm Styrol.

Erfindungsgemäße Nachbehandlung: Bei der Nachbehandlung wurde die Polymerdispersion mit Eisen(II)-sulfat-Lösung (0,01%, bezogen auf die zur Herstellung der Polymerdispersion verwendete Gesamtmonomerenmenge) versetzt und mit Natronlauge auf einen pH-Wert von 7 eingestellt. Dann wurden die beiden Redox-Komponenten [a) eine 20-%ige wässrige Wasserstoffperoxidlösung als Oxydationsmittel und b) eine 30 %ige wässrige Weinsäurelösung als Reduktionsmittel] bei 85 °C getrennt mit einer Zulaufgeschwindigkeit von 10 ml pro Stunde in die Polymerdispersion eindosiert. Nach drei Stunden Zulauf beider Redoxkomponenten wurde eine Verminderung des Restmonomerengehalts auf 63 ppm n-Butylacrylat (99% Verminderung, bezogen auf den Eingangswert) und 5 ppm Styrol (99 % Verminderung, bezogen auf den Eingangswert) erzielt.

### Beispiel 2

Durch radikalische Hauptpolymerisation mit 0,3 g Natriumpersulfat und 0,4 g Ascorbinsäure und 0,01 g Eisen(II)-sulfat wurde eine wässrige Polymerdispersion aus einer Mischung der folgenden Zusammensetzung hergestellt:

440 g n-Butylacrylat, 50 g Acrylnitril, 13 g Acrylsäure, 2,5 g Natronlauge (25 %ig in Wasser), 10 g Emulgator Em1, und 13 g Emulgator Em2 und 980 g Wasser. Emulgator Em1 war eine 20 %ige Lösung eines mit 25 Mol Ethylenoxid ethoxylierten Octylphenols. Emulgator Em2 war ein neutralisiertes sulfatiertes, mit 25 Mol Ethylenoxid ethoxyliertes Nonylphenol.

Die durch 3,5 stündigen Monomerenemulsionszulauf und einstündiger Nachreaktion bei der Polymerisationstemperatur von 85 °C hergestellte Polymerdispersion hatte einen Feststoffgehalt von 54 % und einen Restmonomerengehalt von 9609 ppm n-Butylacrylat und 360 ppm Acrylnitril. Der pH-Wert liegt bei 7.

Erfindungsgemäße Nachbehandlung: Bei der Nachpolymerisation (chemischen Desodorierung) wurden die beiden Redox-Komponenten a) eine 10-%ige wässrige Wasserstoffperoxidlösung sowie b) eine 22-%ige wässrige Weinsäurelösung getrennt mit einer Zulaufgeschwindigkeit je Zulauf von 10 ml/Stunde bei einem pH-Wert von 7 und einer Temperatur von 85 °C in die 1,8 x 10⁻⁴ mol/L Eisen(II)sulfat-haltige Polymerdispersion eindosiert. Nach 3 Stunden Zulauf von beiden Komponenten wurde eine Verringerung des Restmonomerengehalts auf 47 ppm n-Butylacrylat (99,5 % Verminderung, bezogen auf den Eingangswert) und 5 ppm Acrylnitril (98,6 % Verminderung, bezogen auf den Eingangswert) ermittelt.

### Beispiel 3

Durch radikalische Hauptpolymerisation mit Natriumperoxodisulfat als Initiator wurde eine Butadien, Styrol, Acrylsäure, sowie Emulgator und Wasser enthaltende Mischung in eine wässrige Polymerdispersion überführt, die einen Restmonomerengehalt von 1533 ppm Styrol aufwies.

Erfindungsgemäße Nachbehandlung: Bei der Nachbehandlung wurden die beiden Redox-Komponenten [ a) eine 10-%ige wässrige Wasserstoffperoxidlösung und b) eine 22-%ige wässrige Weinsäurelösung] mit einer Zulaufgeschwindigkeit von je 10 mL/Stunde bei einem pH-Wert von 7 und bei 85 °C in die 1,8 x 10⁻⁴ mol/L Eisen(II)sulfathaltige Polymerdispersion eindosiert. Nach 3 Stunden Zulauf der beiden Komponenten wurde eine Verminderung des Restmonomeren Styrol auf 5 ppm (99,7 % Verminderung, bezogen auf den Eingangswert) erzielt. Die Restmenge an Acrylsäure lag unterhalb der Nachweisgrenze (<10 ppm).

## Patentansprüche

1. Verfahren zur Verminderung der Restmonomerenmenge in wässrigen Polymerdispersionen durch Nachbehandlung mit einem Initiatorsystem, **dadurch gekennzeichnet, daß** man die Nachbehandlung in der auf 60 bis 120 °C wässrigen Polymerdispersion unter Zugabe eines Initiatorsystems durchführt, das im wesentlichen besteht aus
a) 0,01 bis 5 Gew.%, bezogen auf die zur Herstellung der Polymerdispersion verwendeten Gesamtmonomerenmenge,
a1) einer Verbindung R¹OOR²,
worin R¹ und R² Wasserstoff, eine C₁ - C₈ Alkyl- oder eine C₆-C₁₂-Arylgruppe bedeuten und gleich oder verschieden sein können, mit der Maßgabe, daß mindestens einer der Reste R¹ und R² Wasserstoff ist, und/oder
a2) einer in wässrigem Medium Wasserstoffperoxid freisetzenden Verbindung, und
b) 0,01 bis 30 Gew.%, bezogen auf die zur Herstellung der Polymerdispersion verwendeten Gesamtmonomerenmenge, einer organischen α-Hydroxycarbonsäure, die keine polymerisierbare olefinisch ungesättigte C-C-Doppelbindung enthält, oder einem Salz davon, und
c) 10 bis 1000 ppm, bezogen auf die zur Herstellung der Polymerdispersion verwendeten Gesamtmonomerenmenge, eines mehrwertigen Metallions, das unter Eisen-, Kupfer-, Mangan-, Nickel-, Cer-, Chrom-, Platin- und Palladiumionen ausgewählt ist.

2. Verfahren nach Anspruch 1, **dadurch gekennzeichnet, daß** die Verbindung b) teilweise oder ganz durch ein Salz davon ersetzt ist.

3. Verfahren nach Anspruch 1, **dadurch gekennzeichnet, daß** die Komponente a) Wasserstoffperoxid ist.

4. Verfahren nach einem der Ansprüche 1 bis 3, **dadurch gekennzeichnet, daß** die Hydroxylgruppe der α-Hydroxycarbonsäure Teil einer Hydroxymethin-Gruppe (CH(OH)) ist.

5. Verfahren nach Anspruch 4, **dadurch gekennzeichnet, daß** die α-Hydroxycarbonsäure Weinsäure oder ein Salz davon ist.

6. Verfahren nach einem der vorhergehenden Ansprüche, **dadurch gekennzeichnet, daß** man als mehrwertige Metallionen Fe²⁺- oder Mn²⁺-Ionen verwendet.

## Claims

1. A process for reducing the amount of residual monomer in aqueous polymer dispersions by aftertreatment with an initiator system, which comprises conducting the aftertreatment in the aqueous polymer dispersion, heated to 60°C to 120°C, with the addition of an initiator system which essentially consists of
a) from 0.01 to 5% by weight, based on the overall amount of monomer used to prepare the polymer dispersion, of
a1) a compound R¹-OO-R²,
where R¹ and R² are hydrogen, a C₁-C₈-alkyl or a C₆-C₁₂-aryl and are identical or different, with the proviso that at least one of R¹ and R² is hydrogen, and/or
a2) a compound which in aqueous medium releases hydrogen peroxide, and
b) from 0.01 to 30% by weight, based on the overall amount of monomer used to prepare the polymer dispersion, of an organic α-hydroxy carboxylic acid, which contains no polymerizable, olefinically unsaturated C-C double bond, or of a salt thereof, and
c) from 10 to 1000 ppm, based on the overall amount of monomer used to prepare the polymer dispersion, of a multivalent metal ion selected from iron, copper, manganese, nickel, cerium, chromium, platinum and palladium ions.

2. A process as claimed in claim 1, wherein all or some of the compound b) is replaced by a salt thereof.

3. A process as claimed in claim 1, wherein component a) is hydrogen peroxide.

4. A process as claimed in any of claims 1 to 3, wherein the hydroxyl of the α-hydroxy carboxylic acid is part of a hydroxymethine group (CH(OH)).

5. A process as claimed in claim 4, wherein the α-hydroxy carboxylic acid is tartaric acid or a salt thereof.

6. A process as claimed in any of the preceding claims, wherein multivalent metal ions used are Fe²⁺ or Mn²⁺ ions.

## Revendications

1. Procédé de réduction de la teneur en monomères résiduels dans des dispersions aqueuses de polymère, au moyen d'un post-traitement à l'aide d'un système d'amorceur, **caractérisé en ce que** l'on réalise le post-traitement dans la dispersion aqueuse de polymère à une température allant de 60°C à 120°C, en ajoutant un système d'amorceur qui est essentiellement composé de
a) 0,01% à 5% en poids, par rapport à la quantité totale de monomères utilisée pour préparer la dispersion aqueuse de polymère,
a1) d'un composé R¹OOR²,
dans lequel R¹ et R², qui peuvent être identiques ou différents, représentent un atome d'hydrogène, un groupe alkyle en C₁ à C₈ ou aryle en C₆ à C₁₂, à condition qu'au moins un des groupes R¹ et R² représente un atome d'hydrogène, et/ou
a2) d'un composé qui libère, dans un milieu aqueux, du peroxyde d'hydrogène, et
b) 0,01% à 30% en poids, par rapport à la quantité totale de monomères utilisée pour préparer la dispersion aqueuse de polymère, d'un acide α-hydroxycarboxylique organique ne contenant pas de double liaison C-C polymérisable à insaturation oléfinique, ou bien d'un de ses sels, et
c) 10 ppm à 1 000 ppm, par rapport à la quantité totale de monomères utilisée pour préparer la dispersion aqueuse de polymère, d'un ion métallique polyvalent choisi parmi les ions de fer, de cuivre, de manganèse, de nickel, de cérium, de chrome, de platine et de palladium.

2. Procédé selon la revendication 1, **caractérisé en ce que** l'on remplace le composé b), partiellement ou complètement, par l'un de ses sels.

3. Procédé selon la revendication 1, **caractérisé en ce que** le composant a) est le peroxyde d'hydrogène.

4. Procédé selon l'une quelconque des revendications 1 à 3, **caractérisé en ce que** le groupe hydroxyle de l'acide α-hydroxycarboxylique fait partie d'un groupe hydroxyméthine (CH(OH)).

5. Procédé selon la revendication 4, **caractérisé en ce que** l'acide α-hydroxycarboxylique est l'acide tartrique ou l'un de ses sels.

6. Procédé selon l'une quelconque des revendications précédentes, **caractérisé en ce que** l'on utilise, en tant que ions métalliques polyvalents, les ions Fe²⁺ ou Mn²⁺.
